# EUROPEAN PATENT SPECIFICATION

(11) **EP 3 290 269 B1**
(45) Date of publication and mention of the grant of the patent: **30.06.2021**
(21) Application number: 17172239.0
(22) Date of filing: 22.05.2017
(51) Int. Cl.: B60Q 1/00, B60Q 1/04, B60Q 1/068

(54) **TRACTOR**
TRAKTOR
TRACTEUR

(30) Priority: 31.08.2016 JP 2016170017
(43) Date of publication of application: 07.03.2018
(73) Proprietor: Kubota Corporation, Osaka-shi, Osaka 556-8601 (JP)
(72) Inventor: KUMASHIRO, Takashi, SAKAI-SHI, OSAKA, 5900823 (JP); FURIHATA, Azusa, SAKAI-SHI, OSAKA, 5900823 (JP); MATSUMOTO, Koichiro, SAKAI-SHI, OSAKA, 5900823 (JP); NAGAI, Hiroki, SAKAI-SHI, OSAKA, 5900823 (JP); AKAI, Yuto, SAKAI-SHI, OSAKA, 5900823 (JP); YAMASHITA, Nobuyuki, SAKAI-SHI, OSAKA, 5900823 (JP); TAKAOKA, Masaki, SAKAI-SHI, OSAKA, 5900823 (JP); TERAOKA, Tasuku, SAKAI-SHI, OSAKA, 5900823 (JP); KOMORIDA, Takeshi, SAKAI-SHI, OSAKA, 5900823 (JP)
(74) Representative: Cabinet Beau de Loménie

(56) References cited:
- JP-A- S62 283 028
- JP-A- 2004 106 787
- JP-A- 2004 314 827
- JP-A- 2005 343 190
- JP-U- S51 115 289
- US-A1- 2011 051 453

## Description

### Field of the Invention

This invention relates to a tractor.

### Background

As an example of tractor above, one is known from e.g. Japanese Unexamined Patent Application Publication No. 2004-224274. This tractor includes a hood provided at a front portion of a vehicle body, a headlight (referred to as "headlamp" in the above document) provided at a front portion of the hood and an optical axis adjusting mechanism for adjusting an optical axis of the headlight. In this tractor, the optical axis of the headlight is adjustable.

The tractor of the above-identified document provides only the ability of optical axis adjustment of the headlight. There remains a need in respect of improvement in readiness of the optical axis adjustment of the headlight.

In view of the above-described situation, there is a need for a tractor that allows easy adjustment of an optical axis of a headlight.
JP 2004 314827 discloses a working light mounting structure in a mobile agricultural machine.
JP 2004 106787 discloses a working light mounting structure in a mobile agricultural machine according to the preamble of claim 1.
JP 2005 343190 discloses a front grille of a working vehicle.
JP S51 115289 discloses a mounting structure for both headlights in an agricultural tractor.

### Summary

A tractor according to the present invention comprises:
a vehicle body;
a hood provided at a front portion of the vehicle body;
a headlight provided at a front portion of the hood;
an optical axis adjusting mechanism for adjusting an optical axis of the headlight; and
a headlight cover detachably attached to a corresponding opening portion of the hood and configured to cover the headlight;
wherein the optical axis adjusting mechanism is operable through the opening portion from the outside of the hood when the headlight cover is detached from the opening portion.

With the above invention, the optical axis adjusting mechanism is readily accessible from the outside of the hood, so that the optical axis of the headlight can be readily adjusted.

According to the invention : the tractor further comprises:
an attaching frame to which the headlight is attached;
wherein the optical axis adjusting mechanism is configured to adjust the optical axis of the headlight by varying attaching angles of the headlight relative to the attaching frame in a vertical direction and a vehicle body left/right direction.

With the above arrangement, the optical axis of the headlight can be easily adjusted only by varying attaching angles of the headlight relative to the attaching frame in a vertical direction and a vehicle body left/right direction.

In the above-described arrangement, preferably:
the headlight is detachably attachable to the attaching frame from the front side thereof; and
the optical axis adjusting mechanism includes a screw type fixing tool extending in a vehicle body front/rear direction between the headlight and the attaching frame and configured to fix the headlight to the attaching frame and an urging member fitted on a portion of the fixing tool between the headlight and the attaching frame.

With the above arrangement, a spacing between the headlight and the attaching frame is varied according to a fastening degree of the fixing tool. Further, the urging member is expanded/contracted according to the spacing between the headlight and the attaching frame. In this way, only by fastening or loosening the fixing tool, the attaching angles of the headlight relative to the attaching frame in the vertical direction and the vehicle body left/right direction are varied and the headlight can be maintained under a predetermined attaching posture by the urging force of the urging member.

In the above-described arrangement, preferably:
at an upper portion and a lower portion of the headlight, there are respectively provided fixed portions to be fixed to the attaching frame by the fixing tool.

With the above arrangement, according to fastening degrees of the upper and lower fixing tools, the attaching angle in the vertical direction of the headlight to the attaching frame will vary. With this, the optical axis of the headlight can be readily adjusted in the vertical direction.

In the above-described arrangement, preferably:
at least at one of the upper and lower portions of the headlight, the fixed portions are provided on both left and right sides.

With the above arrangement, according to fastening degrees of the left and right fixing tools, the attaching angle of the headlight relative to the attaching frame in the vehicle body left/right direction will vary. With this, the optical axis of the headlight can be readily adjusted in the vehicle body left/right direction.

In the above-described arrangement, preferably:
the headlight cover is attached to the attaching frame.

With the above arrangement, the headlight cover can be attached with utilizing the attaching frame.

### Brief Description of the Drawings

Fig. 1 is a left side view showing a tractor,
Fig. 2 is a plane view showing the tractor,
Fig. 3 is a left side view showing an inner arrangement of a hood front portion,
Fig. 4 is a front view showing the inner arrangement of the hood front portion,
Fig. 5 is a rear view showing the inner arrangement of the hood front portion,
Fig. 6 is a perspective view showing a side grill,
Fig. 7 is a left side view showing the hood front portion,
Fig. 8 is a plane view showing the inner arrangement of the hood front portion, and
Fig. 9 is a left side view showing an optical axis adjusting mechanism.

### Detailed Description of the Preferred Embodiment

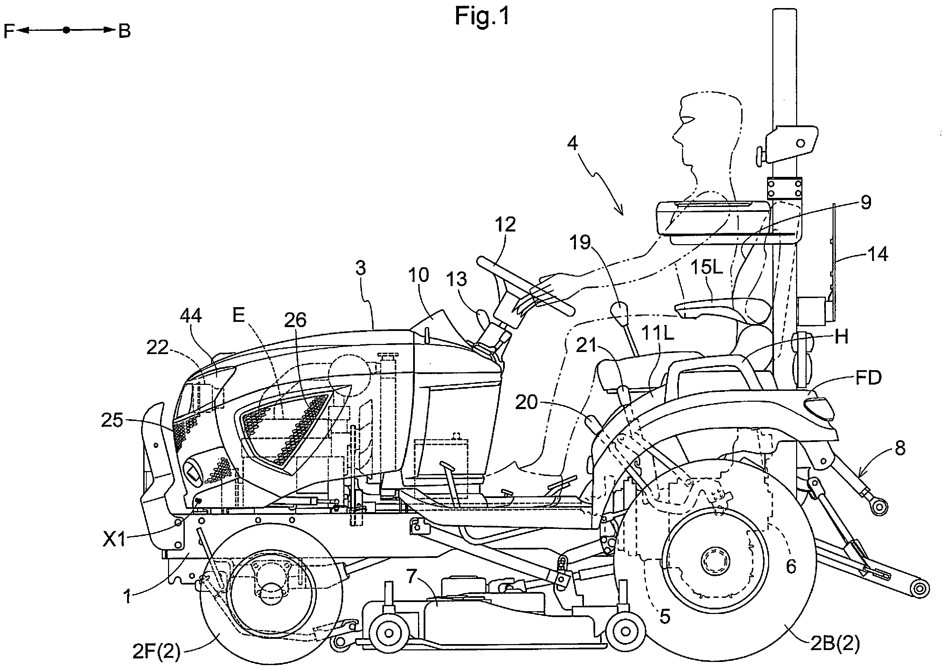

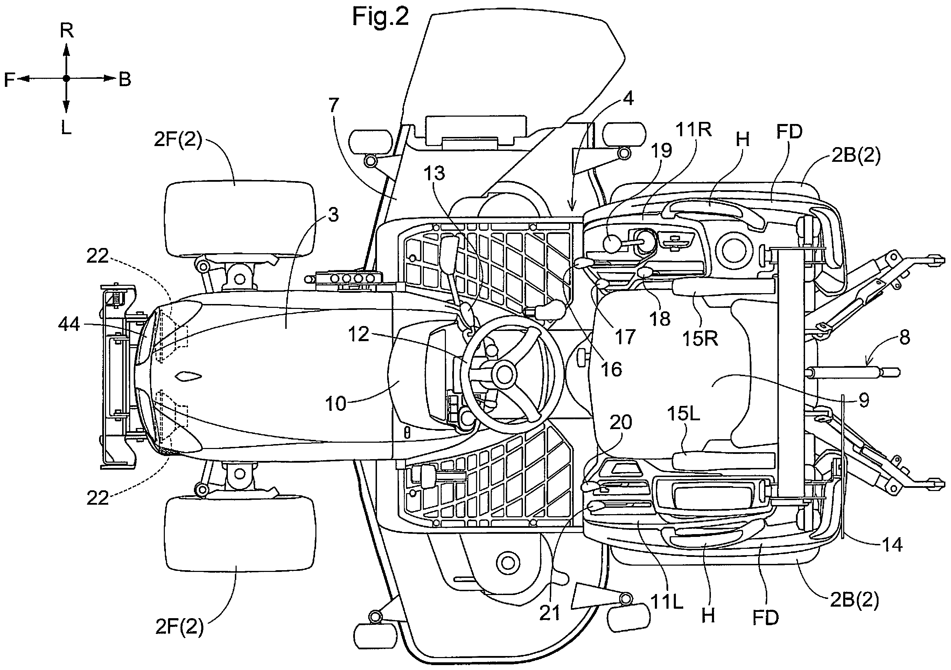

An embodiment of the present invention will be explained with reference to the accompanying drawings. In the following discussion, it is understood that a direction of arrow F in Figs. 1 and 2 will represent "vehicle body front side", a direction of arrow B will represent "vehicle body rear side", a direction of arrow L show in Fig. 2 will represent "vehicle body left side" and a direction of arrow R will represent "vehicle body right side", respectively.

### [General Arrangement of Tractor]

Figs. 1 and 2 show a tractor. This tractor includes a vehicle body frame 1 and a wheel type traveling device 2 supporting the vehicle body frame 1. The traveling device 2 includes a left and right pair of steerable and drivable front wheels 2F and a left and right pair of drivable rear wheels 2B. A left and right pair of fenders FD are provided for covering the rear wheels 2B. Each fender FD includes a handrail H acting as a handle to be gripped by a driver when getting on/off the vehicle.

At a front portion of the vehicle body frame 1, a hood 3 is provided. Inside the hood 3, an engine E is accommodated. The hood 3 is vertically pivotable about a front pivot X1 extending along a left/right direction between a covering position for covering the engine E and an opening position for exposing the engine E to the outside. At front end portions of the hood 3, there are provided a pair of left and right headlights 22.

At a rear half portion of the vehicle body frame 1, a driving section 4 is provided. This tractor includes also a hydrostatic stepless speed changer device 5 as a main speed changer device and a transmission case 6. The transmission case 6 accommodates e.g. a gear type speed changer device (not shown) as an auxiliary speed changer device.

To this tractor, a front loader (not shown) can be attached. Under the vehicle body frame 1 and between the front wheels 2F and the rear wheels 2B, a mower 7 is attached to be lifted up/down. At a rear end portion of the vehicle body frame 1, there is provided a link mechanism 8 that allows attachment of an implement (not shown) such as a rotary tiller, etc.

With this tractor, it is possible to take off a driving power of the engine E via a mid PTO shaft, in order to drive the mower 7. For driving the implement, with this tractor, a driving power from the engine E can be taken off via a rear PTO shaft. This tractor includes a PTO clutch (not shown) switchable between a transmitting state for transmitting the driving power of the engine E to the rear/mid PTO shaft and a non-transmitting state for not transmitting the driving power of the engine E to the rear/mid PTO shaft.

### [Driving Section]

As shown in Fig. 1 and Fig. 2, the driving section 4 includes a driver's seat 9 where a driver is to be seated, a front panel 10, a right lever guide 11R, a left lever guide 11L, etc. The front panel 10 includes a steering wheel 12 for steering the vehicle body and an accelerator lever 13 for varying a rotational speed of the engine E. On a left rear side of the driver's seat 9, there is provided an alarm reflecting board 14 for alarming to the rear side of the vehicle.

The driver's seat 9 includes a left armrest 15L on which a driver's left arm is to rest and a right armrest 15R on which a driver's right arm is to rest. The left armrest 15L and the right armrest 15R respectively is vertically pivotable about a rear pivot along the left/right direction, between a used position where the armrest extends along the vehicle body front/rear direction and a stored position where the armrest extends along the vertical direction.

The left lever guide 11L is provided on an upper face of the left fender FD. The left lever guide 11L is provided with a PTO clutch lever 20 for switching the PTO clutch, a PTO selecting lever 21 for selecting a PTO shaft to be driven.

The right lever guide 11R is provided on an upper face of the right fender FD. The right lever guide 11R is provided with an auxiliary speed changer lever 16 for speed-changing the auxiliary speed changer device, a switching lever 17 for switching the traveling device 2 between a four-wheel drive state and a two-wheel drive state, a lift lever 18 for lifting up/down the implement, and an operational lever 19 for operating the front loader.

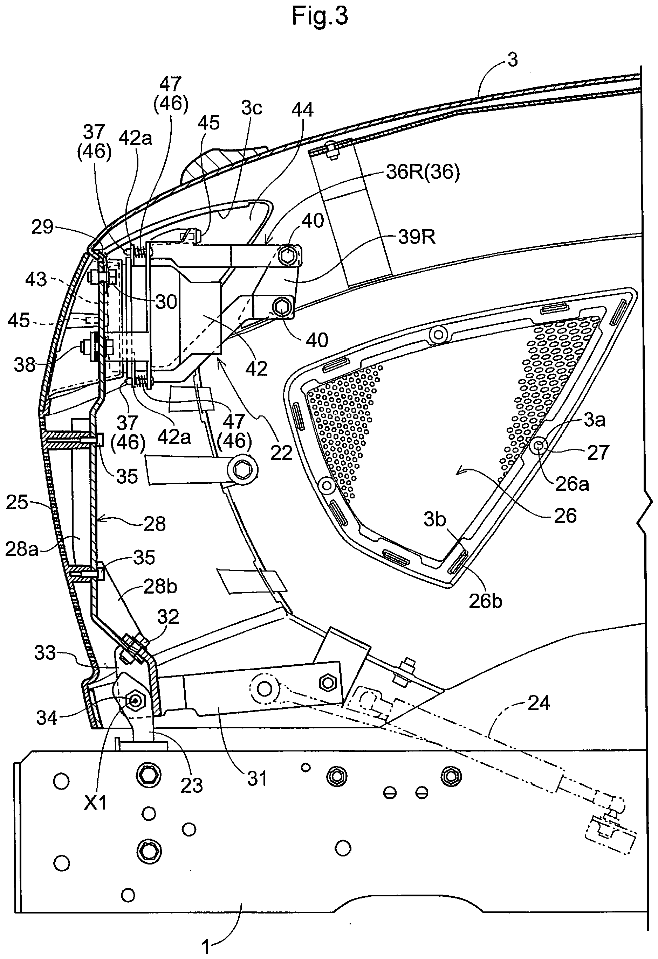

As shown in Figs. 3 through 5, the hood 3 is supported to a pair of left and right hood stays 23 to be vertically pivotable about the front pivot X1. In this tractor, there is provided a dumper 24 configured to urge the hood 3 for its upward pivoting about the front pivot X1 toward its opened position. To a front face portion of the hood 3, there is attached a front grill 25 defining many air ventilation holes. On the left and the right sides the hood 3, there are respectively attached side grills 26 having many air ventilation holes.

### [Side Grills]

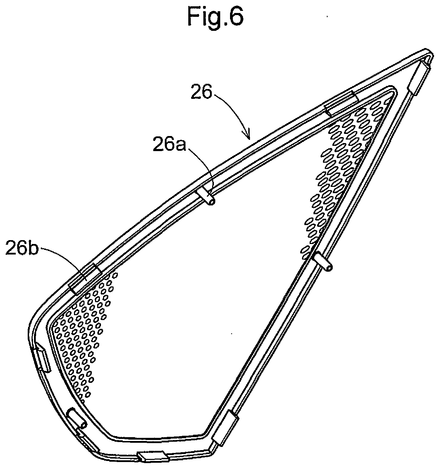

As shown in Fig. 3 and Fig. 6, the side grill 26 includes a plurality (for instance three, in this embodiment) of protruding portions 26a and a plurality (for instance seven, in this embodiment) of pawl portions 26b. The hood 3 defines insertion holes 3a in which the protruding portions 26a are to be inserted, and fit-in holes 3b in which the pawl portions 26b are to be fitted. By inserting the protruding portions 26a into the insertion holes 3a and fitting the pawl portions 26b in the fit-in holes 3b, the side grill 26 is attached to the hood 3.

At inner portions of the hood 3 which portions correspond to the insertion holes 3a, there are provided push nuts 27. When the protruding portions 26a are fixed to the push nuts 27, detachment of the side grill 26 can be prevented. In order to secure attaching strength of the side grill 26 to the hood 3, the pawl portions 26b are disposed at corner portions of the outer circumference of the side grill 26 and also the protruding portions 26a are disposed at side center portions of the outer circumference of the side grill 26.

### [Center Plate]

As shown in Figs. 3 through 5, at a front end portion inside the hood 3, a center plate 28 for supporting the hood 3 is provided between an upper end portion and a lower end portion of the hood 3. The upper end portion of the center plate 28 is fixed by to an upper connecting stay 29 with a bolt 30. The upper connecting stay 29 is provided at the upper end portion of the hood 3. The lower end portion of the center plate 28 is fixed to a lower connecting frame 31 with a bolt 32.

The lower connecting frame 31 is provided between a left side portion and a right side portion of the hood 3, at the lower end portion of the hood 3. The lower connecting frame 31 includes a pair of left and right connecting portions 33 to be connected to the hood stays 23. The connecting portions 33 are fixed with bolts 34 to the hood stays 23 so as to allow the hood 3 to be vertically pivotable about the front pivot X1. Namely, the hood stays 23 support the hood 3 with allowing its vertical pivoting about the front pivot X1 via the bolts 34.

To the center plate 28, the front grill 25 is fixed with bolts 35. The center plate 28, for improvement of the strength of this center plate 28, includes a pair of left and right bent portions 28a and a pair of left and right reinforcing plates 28b. The bent portions 28a are bent forwardly from the left and right opposed end portions at a vertical intermediate portion of the center plate 28. The bent portions 28a are formed integral with the center plate 28.

The reinforcing plates 28b are provided on a rear face of the lower portion of the center plate 28 to extend perpendicularly relative to this rear face. Each reinforcing plate 28b is a member separate from the center plate 28 and fixed (e.g. fixed by welding) to this center plate 28.

### [Attaching Frame]

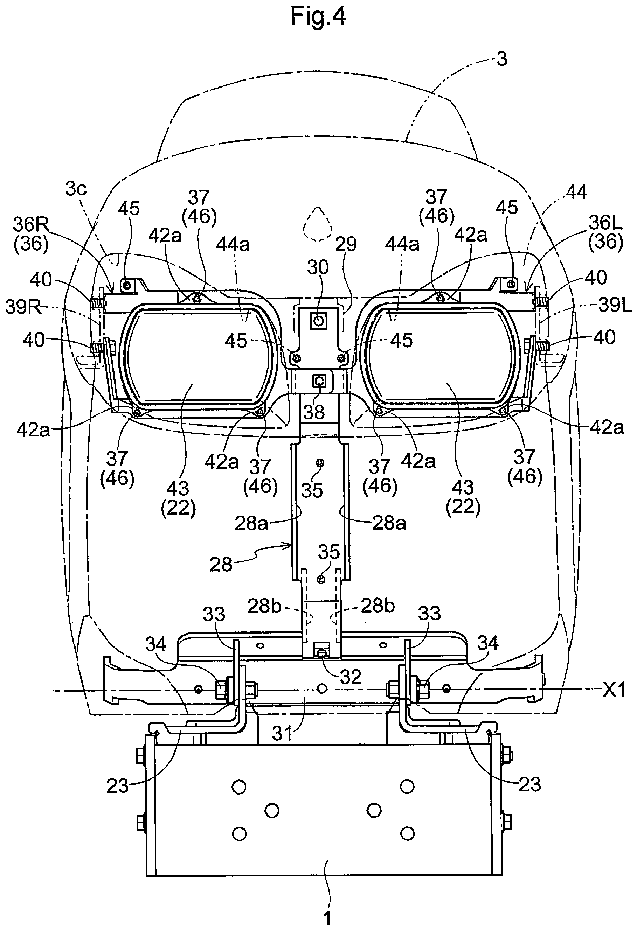

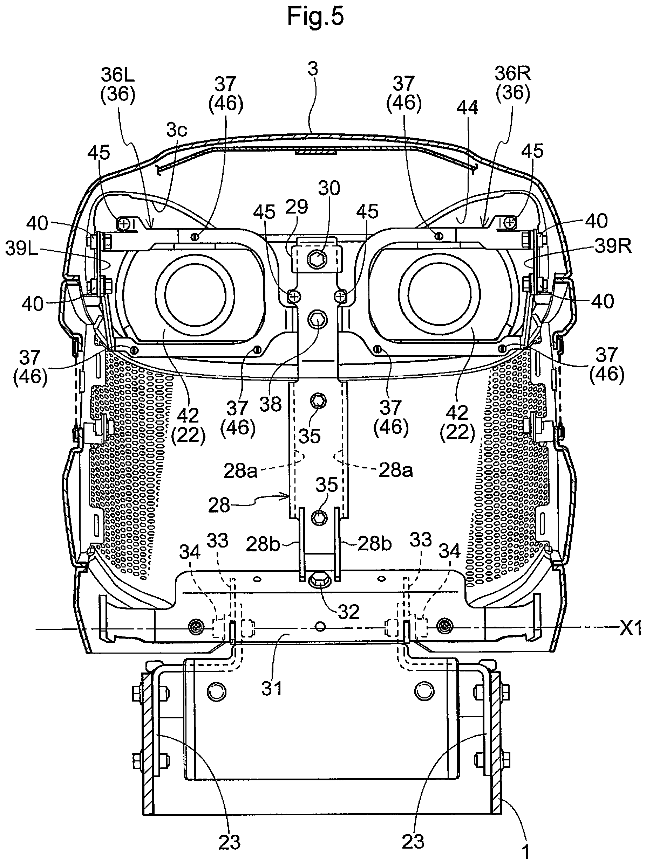

As shown in Fig. 4, Fig. 5, etc., this tractor includes an attaching frame 36 to which the headlights 22 are to be attached. The headlights 22 are fixed to the attaching frame 36 with screws 37 (corresponding to "fixing tool" of the present invention). The attaching frame 36 includes a left attaching frame 36L to which the left headlight 22 is to be attached and a right attaching frame 36R to which the right headlight 22 is to be attached. The attaching frame 36 can be separated into the left attaching frame 36L and the right attaching frame 36R. The right end portion of the left attaching frame 36L and the left end portion of the right attaching frame 36R are overlapped with each other in the front/rear direction and fixed (fixed by being fastened to each other) under this state to the center plate 28 with the bolts 38.

The left attaching frame 36L has a shape formed along the outer circumference portion of the left headlight 22 as viewed in the front/rear direction. The left headlight 22 is detachably attached from the front side thereof to the left attaching frame 36L. The left end portions (upper and lower two portions) of the left attaching frame 36L are fixed to the left connecting stay 39L with bolts 40. The left connecting stay 39L is provided on the left side portion of the hood 3.

The right attaching frame 36R has a shape formed along the outer circumference portion of the right headlight 22 as viewed in the front/rear direction. The right headlight 22 is detachably attached from the front side thereof to the right attaching frame 36R. The right end portions (upper and lower two portions) of the right attaching frame 36R are fixed to the right connecting stay 39R with the bolts 40. The right connecting stay 39R is provided on the right side portion of the hood 3.

### [Headlights]

As shown in Figs. 3 through 5, each headlight 22 includes a main body portion 42 accommodating a light source (not shown) and a light transmitting portion 43 provided to a front face portion of the main body portion 42. At an upper portion and a lower portion of the main body portion 42 respectively, there are provided flange portions 42a (corresponding to "fixed portion" relating to the present invention) to be fixed to the attaching frame 36 with the screws 37. At the upper portion of the main body portion 42, the flange portion 42a is provided at the left/right center portion. At the lower portion of the main body portion 42, the flange portions 42a are provided at a plurality of left/right portions, more particularly, at the respective left and right opposed end portions.

### [Headlight Cover]

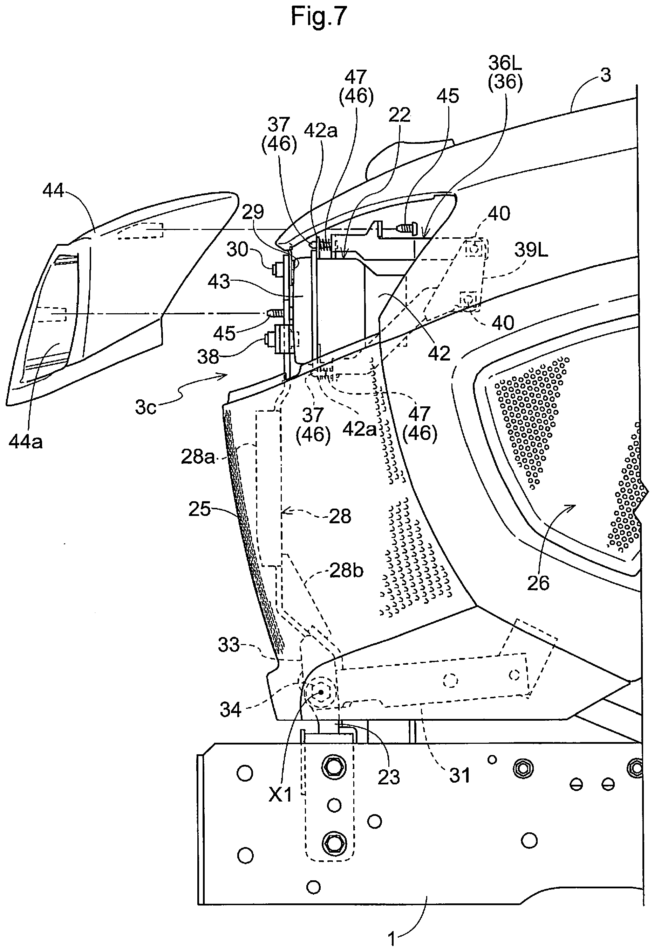

As shown in Fig. 7, etc., there is provided a headlight cover 44 for covering the headlight 22. This headlight cover 44 is detachably attached to a corresponding opening portion 3c of the hood 3. The headlight cover 44 defines a pair of left and right opening portions 44a through which the headlights 22 are exposed to the outside of the hood 3. The headlight cover 44 is fixed to the left attaching frame 36L and the right attaching frame 36R respectively with bolts 45 and fixed to the center plate 28 with bolts 45.

### [Optical Axis Adjusting Mechanism]

As shown in Figs. 3 through 5, there is provided an optical axis adjusting mechanism 46 for adjusting an optical axis of the headlight 22. The optical axis adjusting mechanism 46 adjusts the optical axis of the headlight 22 (in the vertical direction and in the vehicle body left/right direction) by varying attaching angles of the headlight 22 relative to the attaching frame 36 in the vertical direction and the vehicle body left/right direction. The optical axis adjusting mechanism 46 includes screws 37 and springs 47 (corresponding to an "urging member" relating to the present invention).

The screw 37 is a screw type fixing tool that extends in the vehicle body front/rear direction along the headlight 22 and the attaching frame 36 and that fixes the headlight 22 to the attaching frame 36. The attaching frame 36 defines a hole (not shown) in which the screw 37 is inserted. The flange portion 42a defines a hole (not shown) in which the screw 37 is inserted. The screw 37 is inserted to the attaching frame 36 from the rear side thereof. In a front face of the portion of the flange portion 42a corresponding to the hole, a welding nut or the like can be provided.

The screw 37 is fitted on a portion of the screw 37 which portion is located between the headlight 22 (flange portion 42a) and the attaching frame 36. The spring 47 is a compression spring which is configured to urge the headlight 22 to the forward side relative to the attaching frame 36. According to a spacing formed between the headlight 22 (flange portion 42a) and the attaching frame 36, the spring 47 will be expanded/contracted.

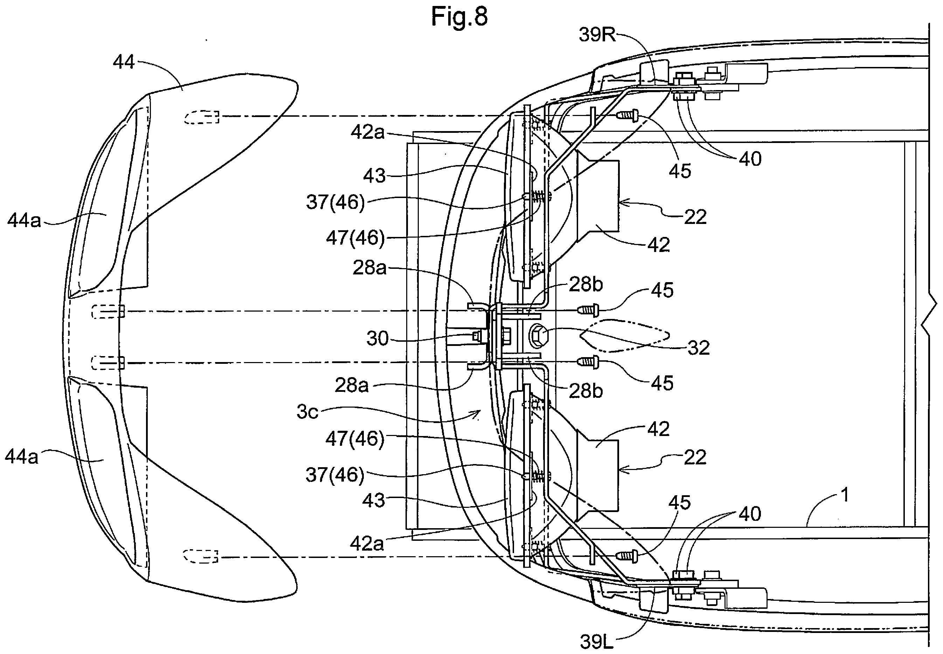

As shown in Fig. 7 and Fig. 8, the optical axis adjusting mechanism 46 is operable through the opening portion 3c from the outside of the hood 3 when the headlight cover 44 is detached from this opening portion 3c. With this, the optical axis adjusting mechanism 46 becomes readily accessible from the outside of the hood 3, so that the optical axis of the headlight 22 can be adjusted easily.

And, in accordance of fastening degrees of the screw 37 (upper screw 37) corresponding to the upper flange portion 42a and the screws 37 (lower screws 37) corresponding to the lower flange portions 42a, the attaching angle in vertical direction of the headlight 22 relative to the attaching frame 36 will vary. With this, the optical axis of the headlight 22 can be adjusted easily in the vertical direction.

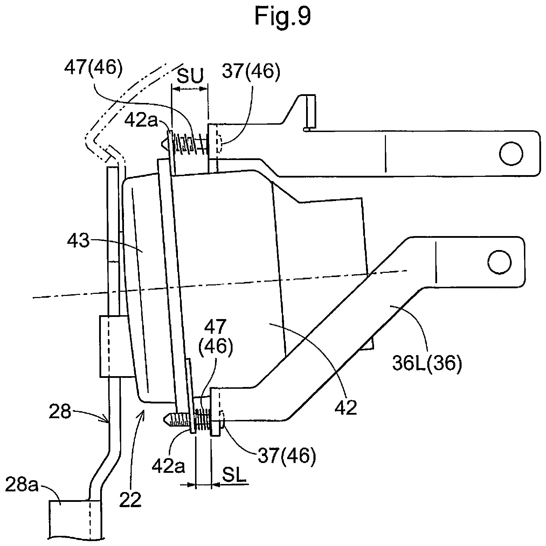

For instance, as shown in Fig.9, between the upper flange portion 42a and the attaching frame 36, a spacing SU (upper spacing) is provided. Further, between the lower flange portions 42a and the attaching frame 36, a spacing SL (lower spacing) is provided. Then, if the fastening degrees of the upper screw 37 and the lower screws 37 are adjusted so as to make the upper spacing SU greater than the lower spacing SL, the headlight 22 will assume a forwardly inclined attaching posture, so that the optical axis of the headlight 22 is inclined forwardly downwards.

Further, if the fastening degrees of the upper screw 37 and the lower screws 37 are adjusted so as to make the upper spacing SU smaller than the lower spacing SL, the headlight 22 will assume a rearwardly inclined attaching posture, so that the optical axis of the headlight 22 is inclined forwardly upwards.

Still further, if the fastening degrees of the upper screw 37 and the lower screws 37 are adjusted so as to make the upper spacing SU equal to the lower spacing SL, the optical axis of the headlight 22 is aligned with the horizontal direction.

Incidentally, through not described in details, similarly to the adjustment method of the optical axis of the headlight 22 in the vertical direction, according to the fastening degrees of the left and right screws 37 corresponding to the lower flange portions 42a, the attaching angle of the headlight 22 relative to the attaching frame 36 will vary in the vehicle body left/right direction. With this, the optical axis of the headlight 22 an be easily adjusted in the vehicle body left/right direction.

### Other Embodiments

Next, other embodiments will be explained. These respective other embodiments, unless contradiction occurs, can be applied in a plurality of combinations to the foregoing embodiment.
(1) In the foregoing embodiment, two headlights 22 are provided. Instead, only one headlight 22 or three or more headlights can be provided.
(2) In the foregoing embodiment, one flange portion 42a is provided at the upper portion of the headlight 22 and two flange portions 42a are provided at the lower portion of the headlight 22. However, instead of the above, two flange portions 42a can be provided at the upper portion of the headlight 22 and one flange portion 42a can be provided at the lower portion of the headlight 22.
(3) In the foregoing embodiment, the screws 37 are inserted to the attaching frame 36 from the rear side. However, instead of the above, the screws 37 can be inserted to the attaching frame 36 from the front side.
(4) In the foregoing embodiment, there was shown a tractor having a mower. Instead, the invention can be applied to a tractor not having a mower.

## Claims

1. A tractor comprising:
a vehicle body;
a hood (3) provided at a front portion of the vehicle body;
a headlight (22) provided at a front portion of the hood (3);
an optical axis adjusting mechanism (46) for adjusting an optical axis of the headlight (22); and
a headlight cover (44) detachably attached to a corresponding opening portion (3c) of the hood (3) and configured to cover the headlight (22);
**characterized in that**
a center plate (28) is provided at a front end portion inside the hood (3) between an upper end portion and a lower portion end portion of the hood (3),
an attaching frame (36) to which the headlight (22) is attached is provided;
the attaching frame (36) is fixed to the center plate (28), and
the optical axis adjusting mechanism (46) is operable through the opening portion (3c) from the outside of the hood (3) when the headlight cover (44) is detached from the opening portion (3c), and
the optical axis adjusting mechanism (46) is configured to adjust the optical axis of the headlight (22) by varying attaching angles of the headlight (22) relative to the attaching frame (36) in a vertical direction and a vehicle body left/right direction.

2. The tractor according to claim 1, wherein:
the headlight (22) is detachably attachable to the attaching frame (36) from the front side thereof; and
the optical axis adjusting mechanism (46) includes a screw type fixing tool (37) extending in a vehicle body front/rear direction between the headlight (22) and the attaching frame (36) and configured to fix the headlight (22) to the attaching frame (36) and an urging member (47) fitted on a portion of the fixing tool (37) between the headlight (22) and the attaching frame (36).

3. The tractor according to claim 2, wherein at an upper portion and a lower portion of the headlight (22), there are respectively provided fixed portions (42a) to be fixed to the attaching frame (36) by the fixing tool (37).

4. The tractor according to claim 3, wherein at least at one of the upper and lower portions of the headlight (22), the fixed portions (42a) are provided on both left and right sides.

5. The tractor according to any one of claims 1-4, wherein the headlight cover (44) is attached to the attaching frame (36).

## Patentansprüche

1. Traktor, umfassend:
eine Fahrzeugkarosserie,
eine Motorhaube (3), die an einer vorderen Sektion der Fahrzeugkarosserie vorgesehen ist,
eine Frontleuchte (22), die an einer vorderen Sektion der Motorhaube (3) vorgesehen ist,
einen Einstellmechanismus (46) für optische Achsen zum Einstellen einer optischen Achse der Frontleuchte (22) und
eine Frontleuchtenabdeckung (44), die abnehmbar an einer entsprechenden Öffnungssektion (3c) der Motorhaube (3) angebracht und dazu ausgestaltet ist, die Frontleuchte (22) abzudecken,
**dadurch gekennzeichnet, dass**
eine Mittelplatte (28) an einer vorderen Endsektion im Inneren der Motorhaube (3) zwischen einer oberen Endsektion und einer unteren Endsektion der Motorhaube (3) vorgesehen ist,
ein Anbringungsrahmen (36), an dem die Frontleuchte (22) angebracht ist, vorgesehen ist,
der Anbringungsrahmen (36) an der Mittelplatte (28) befestigt ist,
der Einstellmechanismus (46) für optische Achsen durch die Öffnungssektion (3c) von außerhalb der Motorhaube (3) betätigbar ist, wenn die Frontleuchtenabdeckung (44) von der Öffnungssektion (3c) abgenommen ist, und
der Einstellmechanismus (46) für optische Achsen dazu ausgestaltet ist, die optische Achse der Frontleuchte (22) durch Variieren von Anbringungswinkeln der Frontleuchte (22) relativ zu dem Anbringungsrahmen (36) in einer vertikalen Richtung und einer Fahrzeugkarosserie-Links/Rechts-Richtung einzustellen.

2. Traktor nach Anspruch 1, wobei:
die Frontleuchte (22) an dem Anbringungsrahmen (36) von dessen Vorderseite abnehmbar anbringbar ist und
der Einstellmechanismus (46) für optische Achsen ein Befestigungsmittel (37) vom Typ Schraube beinhaltet, das sich in einer Fahrzeugkarosserie-Front/Heck-Richtung zwischen der Frontleuchte (22) und dem Anbringungsrahmen (36) erstreckt und dazu ausgestaltet ist, die Frontleuchte (22) an dem Anbringungsrahmen (36) und einem Andrückteil (47) zu befestigen, das an einer Sektion des Befestigungswerkzeugs (37) zwischen der Frontleuchte (22) und dem Anbringungsrahmen (36) montiert ist.

3. Traktor nach Anspruch 2, wobei an einer oberen Sektion und einer unteren Sektion der Frontleuchte (22) jeweils feste Sektionen (42a) vorgesehen sind, die an dem Anbringungsrahmen (36) durch das Befestigungswerkzeug (37) befestigt werden sollen.

4. Traktor nach Anspruch 3, wobei die festen Sektionen (42a) von mindestens einer von der oberen und unteren Sektion der Frontleuchte (22), sowohl auf der linken als auch auf der rechten Seite vorgesehen sind.

5. Traktor nach einem der Ansprüche 1 bis 4, wobei die Frontleuchtenabdeckung (44) an dem Anbringungsrahmen (36) angebracht ist.

## Revendications

1. Tracteur comprenant :
un corps de véhicule ;
un capot (3) prévu au niveau d'une partie avant du corps de véhicule ;
un phare (22) prévu au niveau d'une partie avant du capot (3) ;
un mécanisme d'ajustement d'axe optique (46) pour ajuster un axe optique du phare (22) ; et
un couvercle de phare (44) fixé, de manière détachable, sur une partie d'ouverture (3c) correspondante du capot (3) et configuré pour recouvrir le phare (22) ;
**caractérisé en ce que** :
une plaque centrale (28) est prévue au niveau d'une partie d'extrémité avant à l'intérieur du capot (3) entre une partie d'extrémité supérieure et une partie d'extrémité de partie inférieure du capot (3),
un bâti de fixation (36) auquel le phare (22) est fixé, est prévu ;
le bâti de fixation (36) est fixé à la plaque centrale (28), et
le mécanisme d'ajustement d'axe optique (46) est opérable par le biais de la partie d'ouverture (3c) depuis l'extérieur du capot (3) lorsque le couvercle de phare (44) est détaché de la partie d'ouverture (3c), et
le mécanisme d'ajustement d'axe optique (46) est configuré pour ajuster l'axe optique du phare (22) en modifiant les angles de fixation du phare (22) par rapport au bâti de fixation (36) dans une direction verticale et une direction gauche / droite de corps de véhicule.

2. Tracteur selon la revendication 1, dans lequel :
le phare (22) peut être fixé, de manière détachable, au bâti de fixation (36) à partir de son côté avant ; et
le mécanisme d'ajustement d'axe optique (46) comprend un outil de fixation de type à vis (37) s'étendant dans une direction avant / arrière de corps de véhicule entre le phare (22) et le bâti de fixation (36) et configuré pour fixer le phare (22) au bâti de fixation (36) et un élément de poussée (47) monté sur une partie de l'outil de fixation (37) entre le phare (22) et le bâti de fixation (36).

3. Tracteur selon la revendication 2, dans lequel, au niveau d'une partie supérieure et d'une partie inférieure du phare (22), on prévoit respectivement des parties fixées (42a) à fixer au bâti de fixation (36) par l'outil de fixation (37).

4. Tracteur selon la revendication 3, dans lequel au moins au niveau de l'une des parties supérieure et inférieure du phare (22), les parties fixées (42a) sont prévues à la fois sur les côtés gauche et droit.

5. Tracteur selon l'une quelconque des revendications 1 à 4, dans lequel le couvercle de phare (44) est fixé au bâti de fixation (36).
